# EUROPÄISCHE PATENTSCHRIFT

(11) **EP 3 876 372 B1**
(45) Veröffentlichungstag und Bekanntmachung des Hinweises auf die Patenterteilung: **13.12.2023**
(21) Anmeldenummer: 21160184.4
(22) Anmeldetag: 02.03.2021
(51) Int. Cl.: H02G 3/22, H02G 15/04

(54) **EXPLOSIONSGESCHÜTZTE VORRICHTUNG**
EXPLOSION-PROOF DEVICE
DISPOSITIF PROTÉGÉ CONTRE LES EXPLOSIONS

(30) Priorität: 05.03.2020 DE 102020106044
(43) Veröffentlichungstag der Anmeldung: 08.09.2021
(73) Patentinhaber: Pepperl+Fuchs SE, 68307 Mannheim (DE)
(72) Erfinder: Hellmann, Michael, 68307 Mannheim (DE)
(74) Vertreter: Hamel, Armin

(56) Entgegenhaltungen:
- DE-A1- 1 515 863
- DE-A1- 3 833 370
- DE-U1- 9 105 499
- US-A1- 2011 211 978

## Beschreibung

Die Erfindung betrifft eine explosionsgeschützte Vorrichtung nach dem Oberbegriff des Patentanspruchs 1.

Das Durchführen von elektrischen und/oder optischen Leitern aus einer explosionsgefährdeten Atmosphäre in einen explosionsgeschützten Raum, z.B. innerhalb eines explosionsgeschützten Gehäuses, ist aufwendig. Um sicherzustellen, dass kein Zünddurchschlag aus dem explosionsgeschützten Raum nach außen in die explosionsgefährdete Atmosphäre gelangen kann, ist beispielsweise aus EP 0 490 637 A1 eine Leitungsverschraubungsanordnung für eine Verbindung zwischen einer Wand und einer Leitung bekannt, die eine Dichtung umfasst. Die Dichtung besteht aus einem Ring mit rechteckigem Querschnitt und einer V-förmigen Nut, die um den Außenrand des Rings verläuft.

Weiterhin ist aus DE 10 2015 112 284 A1 eine explosionsgeschützte Anordnung mit einem Durchführungsteil, das eine Durchführungsöffnung mit einer Durchführungsfläche aufweist, beschrieben. Die Anordnung umfasst einen verformbaren Innenkörper, der wenigstens einen, sich in einer Längsrichtung durch den Innenkörper erstreckenden, Leitungskanal aufweist, mit wenigstens einer Leitung, die sich durch den wenigstens einen Leitungskanal erstreckt und wenigstens einen elektrischen und/oder optischen Leiter aufweist, wobei der Innenkörper von einer Verbindungshülse in einer Umfangsrichtung um die Längsrichtung umschlossen ist, die aus einem plastisch verformbaren Material besteht und durch plastische Umformung eines Verbindungsabschnitts nach innen auf den Innenkörper drückt, den Innenkörper verformt und dadurch kraftschlüssig mit der Leitung verbindet, wobei der plastisch umgeformte Verbindungsabschnitt eine, zu einer zweiten Begrenzungsfläche plastisch umgeformte, Abschnittsaußenfläche aufweist, die mit einer, durch die erste Begrenzungsfläche gebildete, Durchführungsfläche einen zünddurchschlagsicheren Ex-Spalt bildet.

Des Weiteren beschreibt EP 0 598 136 A1 eine Dichtstruktur für ein zur Durchführung eines Teils ausgebildetes Loch eines metallischen Wandteils, bei der ein Teil, das zum Verbinden einer an einer Seite des Wandteils angeordneten Einrichtung mit einer an der gegenüberliegenden Seite des Wandteils angeordneten Einrichtung vorgesehen ist, durch das in das metallische Wandteil gebohrte Loch hindurchgeführt wird, wobei das Verbindungsteil gegenüber radialer Kompression resistent ist und seine Axiallänge größer ist als die Dicke des metallischen Wandteils, und bei der ein Dichtteil zum Dichten des Lochs vorgesehen ist. Das Dichtteil ist zwischen dem Durchführungsteil und der Innenwandfläche des Lochs angeordnet, wobei das Dichtteil einen Außendurchmesser, der im Wesentlichen gleich dem Innendurchmesser des Lochs ist, und eine Axiallänge hat, die gleich der Dicke des metallischen Wandteils oder größer als diese ist. In mindestens einer der Öffnungen an den gegenüberliegenden Enden des Lochs ist ein Verengungsbereich ausgebildet. Das Durchführungsteil und das Dichtteil sind von ihren Umfangsbereichen her mittels des Verengungsbereiches komprimiert, wobei das Dichtteil in dem Loch eingeklemmt ist, um dadurch das Loch abzudichten.

Weiterhin ist in DE 91 05 499 U1 eine druckfeste zünddurchschlagsichere Durchführung für eine oder mehrere elektrische Leitungen durch eine Öffnung beschrieben, bei welcher die Leitung bzw. die Leitungen innerhalb der Öffnung von einem in axialer Richtung und an der Wand der Öffnung radial abgestützten Dichtelement umgeben sind, welches aus thermisch hoch belastbarem, elastischem Material besteht und das mittels einer in axialer Richtung wirkenden Druckvorrichtung eingepresst in der Wandöffnung gehalten ist.

DE 15 15 863 A1 beschreibt eine Verbindung oder ein Endverschluss an einem elektrischen Kabel, wobei auf das Kabel ein rohrförmiger, elastischer Füllkörper aufgeschoben wird. Der Füllkörper besteht ganz oder hauptsächlich aus dielektrischem Material. Das Ende des Füllkörpers wird in ein Gehäuse eingesetzt, bis der Teil mit einem größeren Durchmesser an dem Gehäuse anliegt, wobei sukzessiv eine Kraft in Längsrichtung des Füllkörpers von dessen entgegengesetzten Enden aus angelegt wird, so dass seine Innenwandung in flächenhafte Berührung mit dem im Füllkörper befindlichen Teil des Kabels längs einer Fläche gelangt.

Ferner ist aus US 2011/211978 A1 ein Tauchmotor umfassend ein Gehäuse mit einer Wand aufweisend eine wasserdichte Kabeldurchführung bekannt. Die Kabeldurchführung umfasst eine Einführung in der Wand für ein Kabel und eine von der Einführung lösbare Dichtmanschette mit einer Durchführung für das Kabel. Die Dichtmanschette umfasst eine erste Dichtung, die an der Durchdringung angeordnet ist, und Mittel zum Aufbringen einer Kraft auf die erste Dichtung, die ist dazu ausgelegt, die erste Dichtung radial in der Durchdringung permanent mit Kraft zu beaufschlagen.

Schließlich ist aus DE 10 2014 100 492 A1 eine Vorrichtung zum staubzündungssicheren Durchführen eines Bauteils durch eine Öffnung in eine Wand eines explosionsgeschützten Gehäuses bekannt. Ein verformbares und/oder formbares Dichtungselement wird direkt in die Öffnung der Wand angeordnet. Eine Klemmanordnung dient zum Klemmen des Dichtungselements gegen einen Klemmabschnitt der Wand, wobei sich der Klemmabschnitt quer zu einer Durchführungsrichtung verjüngt. Um das Dichtungselement festzuklemmen, übt die Klemmanordnung eine axiale Klemmkraft auf das Dichtungselement in der Durchführungsrichtung aus. Während dieses Vorgangs kann sich das Dichtungselement in radialer Richtung zumindest geringfügig verformen und kommt an der Öffnung in der Wand und an dem Bauteil zum Anliegen, der durch das Dichtungselement geführt wird. Dies führt zu einer staubzündungssicheren Anordnung.

Problematisch bei den bekannten Lösungen ist, dass gerade bei sehr tiefen Temperaturen oder bei starken Temperaturschwankungen nicht gewährleistet ist, dass die Dichtung vollständig an der Innenwand des sie umgebenden Gehäuses anliegt.

Aufgabe der vorliegenden Erfindung ist es deshalb, eine explosionsgeschützte Vorrichtung bereitzustellen, bei der auch bei tiefen Temperaturen oder bei starken Temperaturschwankungen ein Explosionsschutz gewährleistet ist.

Diese Aufgabe wird nach den Merkmalen des Patentanspruchs 1 gelöst.

Die Erfindung betrifft somit eine explosionsgeschützte Vorrichtung umfassend einen verformbaren Innenkörper, der wenigstens einen sich entlang einer Längsachse durch den Innenkörper erstreckenden Leitungskanal aufweist. Durch diesen wenigstens einen Leitungskanal verläuft eine Leitung. Bei der Leitung kann es sich um eine optische oder elektrische Leitung handeln. Der Innenkörper ist von einem Gehäuse in einer Umfangsrichtung entlang der Längsachse umschlossen, wobei das Gehäuse in einen Eingangsabschnitt für die wenigstens eine Leitung, einen Ausgangsabschnitt für die wenigstens eine Leitung sowie einen dazwischen liegenden mittleren Abschnitt aufweist. Dabei liegt der mittlere Abschnitt zumindest teilweise außerhalb eines explosionsgeschützten Bereichs und der Ausgangsabschnitt in dem explosionsgeschützten Bereich. Die explosionsgeschützte Vorrichtung weist zudem ein Federelement auf, das im mittleren Abschnitt angeordnet ist und ständig auf den Innenkörper Druck ausübt. Der durch die Federkraft erzeugte Druck ist dabei groß genug, um den Innenkörper zu verformen. Das Federelement gewährleistet damit, dass der Innenkörper auch bei sehr tiefen Temperaturen oder bei starken Temperaturschwankungen vollständig an der Innenwand des ihn umgebenden Gehäuse sowie der mindestens einen Leitung anliegt. Zwischen der zweiten Stützscheibe und dem Federelement ist eine entlang der Längsachse bewegliche Adapterhülse angeordnet. Diese Adapterhülse dient zur Kraftübertragung der Federkraft des Federelements auf die zweite Stützscheibe. Diese Adapterhülse eignet sich insbesondere als Verdrehsicherung. Ohne eine solche Adapterhülse würde sich die Drehbewegung der Montageschraube auf die erste Stützscheibe übertragen und sich die erste Stützscheibe gegenüber dem Innenkörper verdrehen, was dazu führen könnte, dass die Leitungen abgeschert werden.

Es ist ferner eine erste Stützscheibe mit wenigstens einer sich entlang der Längsachse des Gehäuses erstreckenden Durchführung für eine Leitung und eine zweite Stützscheibe mit wenigstens einer sich entlang der Längsachse erstreckenden Durchführung für eine Leitung vorgesehen, wobei diese beiden Stützscheiben den Innenkörper entlang einer Querachse umgeben. Dabei ist die erste Stützscheibe im Ausgangsabschnitt und die zweite Stützscheibe im mittleren Abschnitt des Gehäuses angeordnet. Diese beiden Stützscheiben sind nicht an dem Gehäuse befestigt, so dass die beiden Stützscheiben innerhalb des Gehäuses entlang der Längsachse bewegbar angeordnet sind. Dabei übt das vorgespannte Federelement stetig Druck auf die zweite Stützscheibe und damit auch auf den Innenkörper sowie die erste Stützscheibe aus, so dass das Federelement die beiden Stützscheiben sowie den Innenkörper in Richtung des Ausgangsabschnitts drückt. Der Druck ist dabei so groß, dass er im Stande ist, den Innenkörper zu verformen. Damit ist gewährleistet, dass bei unerwünschten Verformungen des Innenkörpers - gerade bei tiefen Temperaturen oder bei starken Temperaturschwankungen - das Federelement die zweite Stützscheibe weiter auf den Innenkörper drückt, wodurch der Innenkörper weiterhin vollständig mit dem Gehäuse bzw. mit den Stützscheiben in Kontakt bleibt und somit einen Innenraum zwischen den beiden Stützscheiben vollständig ausfüllt und dabei auch die Leitungen umgibt. Es versteht sich, dass die Federkraft, die dazu erforderlich ist, abhängig vom Material des Innenkörpers ist. Ein Fachmann wird daher für ein bestimmtes Material des Innenkörpers ein solches Federelement verwenden, das im Stande ist, ausreichend Druck auf Innenkörper ausüben, um den Innenkörper zu verformen.

Die wenigstens eine Durchführung der zweiten Stützscheibe und die wenigstens eine Durchführung der ersten Stützscheibe sowie der wenigstens eine Leitungskanal des Innenkörpers bilden einen Durchführungskanal, durch den die eine Leitung hindurchgeführt ist. Vorzugsweise sind in den beiden Stützscheiben mehrere Durchführungen und in dem Innenkörper mehrere Leitungskanäle vorgesehen, die derart zueinander angeordnet sind, dass mehrere Durchführungskanäle für je eine Leitung gebildet werden. Es versteht sich, dass die Anzahl der Leitungskanäle sowie die Anzahl der Durchführungen der beiden Stützscheiben in diesem Fall identisch sind.

In einer weiteren Ausführungsform ist eine Montageschraube zum Vorspannen des Federelements vorgesehen, die im Eingangsabschnitt des Gehäuses eingebracht ist. Durch diese Montageschraube kann die Federkraft des Federelements durch Festziehen oder Lösen Montageschraube der einfach eingestellt werden.

In einer weiteren bevorzugten Ausführungsform ist eine Hülse vorgesehen, die den Innenkörper entlang der Längsachse sowie die beiden Stützscheiben umgibt, wobei die Hülse zwischen dem Innenkörper und dem Gehäuse angeordnet ist. Vorteilhaft bei der Verwendung der Hülse ist, dass die beiden Stützscheiben und der Innenkörper in dieser Hülse vormontiert werden können, so dass die Hülse samt der beiden Stützscheiben und dem Innenkörper einfach in das Gehäuse eingeschoben werden kann.

In einer anderen bevorzugten Ausführungsform besteht der Innenkörper aus mindestens zwei Teilabschnitten. Möglich ist aber auch, dass der Innenkörper aus Granulat oder Pulver besteht.

Besteht der Innenkörper aus mehreren Teilabschnitten, aus Granulat oder aber aus Pulver, so wird die Montage der Leitungen erleichtert.

Es wird explizit auch vorgeschlagen, mehrere Merkmale der einzelnen beschriebenen Ausführungsformen untereinander zu kombinieren.

Die vorliegende Erfindung wird im Folgenden anhand von Zeichnungen näher erläutert. Es zeigen:
- Figur 1: eine perspektivische Ansicht einer explosionsgeschützten Vorrichtung;
- Figur 2: eine weitere Ansicht der explosionsgeschützten Vorrichtung nach Figur 1 ;
- Figur 3: einen Längsschnitt durch die explosionsgeschützte Vorrichtung nach Figur 1 und
- Figur 4: eine Variante der explosionsgeschützten Vorrichtung nach Figur 3.

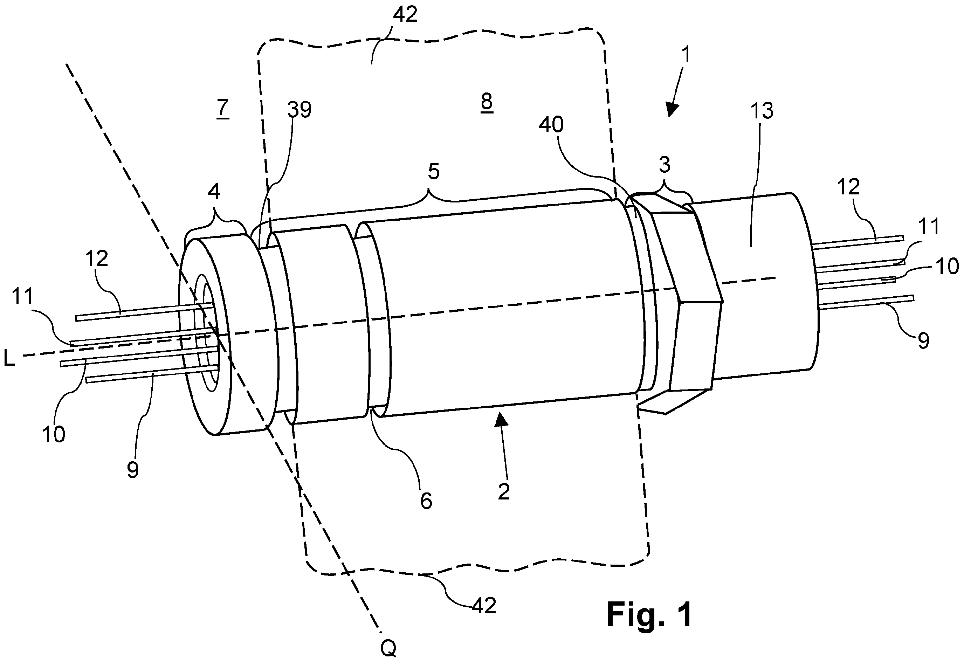

In Figur 1 ist eine perspektivische Ansicht einer explosionsgeschützten Vorrichtung 1 dargestellt, die zumindest teilweise in einem explosionsgeschützten Bereich 7 angeordnet werden kann. Die Vorrichtung 1 umfasst ein Gehäuse 2, aufweisend einen Eingangsabschnitt 3 sowie einen Ausgangsabschnitt 4 sowie einen dazwischen liegenden mittleren Abschnitt 5. Der mittlere Abschnitt 5 weist außen eine Verjüngung 6 auf. In diese Verjüngung 6 kann ein Dichtring eingesetzt werden, wobei ein Dichtring nicht dargestellt ist. Eine Wand, die den explosionsgeschützten Bereich 7 von einem explosionsgefährdeten Bereich 8 trennt, trägt die Bezugszahl 42. Dadurch befindet sich der Ausgangsabschnitt 4 vollständig in dem explosionsgeschützten Bereich 7, wohingegen der mittlere Abschnitt 5 nur teilweise in dem explosionsgeschützten Bereich 7 angeordnet ist. Es sind mehrere Leitungen vorgesehen, die über den Eingangsabschnitt 3 in das Gehäuse 2 eingeführt und über den Ausgangsabschnitt 4 wieder hinausgeführt sind. In Figur 1 besitzt die Vorrichtung 1 vier Leitungen 9 bis 12, wobei auch weniger oder mehr Leitungen vorgesehen sein können. Bei den Leitungen 9 bis 12 kann es sich um optische oder elektrische Leitungen handeln. Die Leitungen 9 bis 12 werden dabei entlang einer Längsachse L durch das Gehäuse 2 hindurchgeführt. Die elektrischen Leitungen können dabei Strom in den explosionsgeschützten Bereich führen. Die optischen Leitungen können Glasfaserleitungen sein, mit denen optische Messungen im explosionsgeschützten Bereich durchgeführt werden können oder aber optische Leitungen, die mit einem Sensor verbunden sind, die sich im explosionsgeschützten Bereich befinden (nicht dargestellt). Die Leitungen können aber auch zur Datenübertragung dienen. Es versteht sich, dass die Leitungen durch eine Schutzschicht aus Kunststoff isoliert sind, wobei die Kunststoffschicht nicht extra dargestellt ist, zumal solche Leitungen handelsüblich sind.

In den Eingangsabschnitt 3 ist eine Montageschraube 13 eingebracht, mit der ein im Gehäuse 2 befindliches Federelement (nicht zu erkennen) vorgespannt werden kann. Die Montageschraube 13 besitzt entlang der Längsachse L eine Durchführung für Leitungen, so dass die Leitungen 9 bis 12 durch die Montageschraube 13 hindurchgeführt werden können.

Auf die Montageschraube 13 kann auch verzichtet werden, wenn auf andere Art und Weise die Federkraft auf das Federelement aufgebracht wird. So ist es zum Beispiel möglich, das Federelement vorgespannt in das Gehäuse 2 einzubringen und dann eine Kappe aufzubringen, die das Gehäuse 2 verschließt und durch die das Federelement vorgespannt bleibt. Es versteht sich, dass die Kappe ebenfalls Durchführungen für Leitungen aufweist.

Das Gehäuse 2 sowie die Montageschraube 13 bestehen vorzugsweise aus einem Metall, einer Metalllegierung oder einem hochverstärkten Kunststoff. So können das Gehäuse 2 bzw. die Montageschraube 13 beispielsweise aus Edelstahl oder Polyetheretherketon (PEEK) bestehen.

Im mittleren Abschnitt 5 sind zwei Nuten 39, 40 vorgesehen, in die jeweils ein Sicherungsring eingebracht werden kann, um die Vorrichtung 1 in der Wand 42 zu halten. Sicherungsringe sind in der Figur 1 nicht gezeigt. Dabei ist es wichtig, dass zumindest in der Nut 39 ein Sicherungsring zum Halten der Vorrichtung 1 in der Wand 42 vorgesehen ist. Auf einen Sicherungsring in der Nut 40 kann somit auch verzichtet werden.

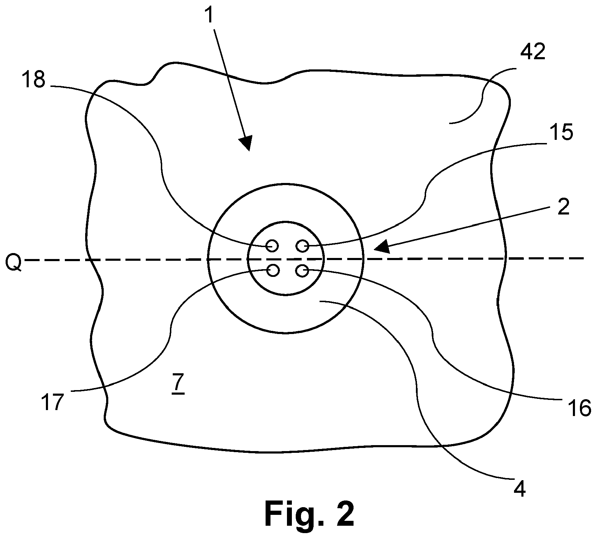

In Figur 2 ist eine weitere Ansicht der explosionsgeschützten Vorrichtung 1 nach Figur 1 dargestellt, wobei auf den Ausgangsabschnitt 4 geblickt wird (Blickrichtung A). Der Ausgangsabschnitt 4 des Gehäuses 2 der Vorrichtung 1 befindet sich damit im explosionsgeschützten Bereich 7, der durch die Wand 42 vom explosionsgefährdeten Bereich abgetrennt ist, so dass dieser explosionsgefährdete Bereich nicht zu sehen ist. Die Wand 42 ist in der Figur 2 nur ausschnittsweise dargestellt.

In dem Ausgangsabschnitt 4 des Gehäuses 2 ist eine erste Stützscheibe 14 vorgesehen, die vier Durchführungen 15 bis 18 aufweist, durch die die Leitungen 9 bis 12 (vergleiche Figur 1) hindurchgeführt sind und den Ausgangsabschnitt 4 des Gehäuses 2 verlassen. Damit die Durchführungen 15 bis 18 besser zu erkennen sind, sind die Leitungen in der Figur 2 nicht dargestellt. Diese erste Stützscheibe 14 ist im Gehäuse 2 entlang einer Querachse Q angeordnet.

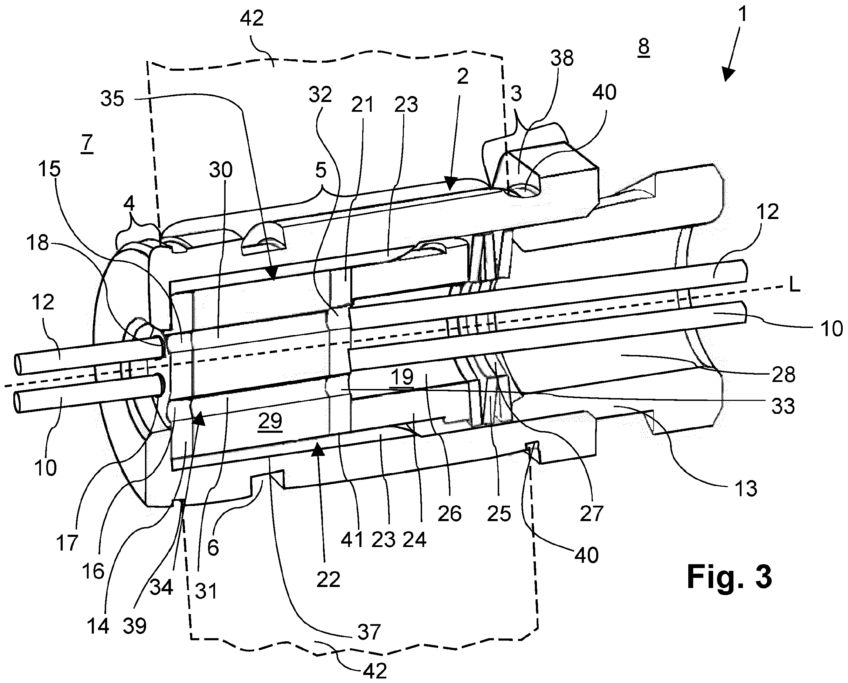

Figur 3 zeigt einen Längsschnitt durch die explosionsgeschützte Vorrichtung 1 nach Figur 1, so dass ein Innenbereich 19 des Gehäuses 2 zu erkennen ist. An die im Ausgangsabschnitt 4 angeordnete Stützscheibe 14 schließt sich ein verformbarer Innenkörper 20 und daran eine zweite Stützscheibe 21 an, so dass der Innenkörper 20 von den beiden Stützscheiben 14, 21 umgeben ist. Der Innenkörper 20 sowie die zweite Stützscheibe 21 sind im mittleren Abschnitt 5 des Gehäuses 2 angeordnet.

Zwischen dem Innenbereich 19 des Gehäuses 2 und einer Anordnung 22, umfassend die beiden Stützscheiben 14, 21 und den Innenkörper 20, ist eine Hülse 23 angeordnet. Die Verwendung einer Hülse 23 bedeutet jedoch, dass ein zusätzliches Bauteil eingesetzt werden muss. Daher kann auf die Hülse 23 auch verzichtet werden, wodurch die Anordnung 22 direkt mit dem Gehäuse 2 in Kontakt stehen würde.

Durch den Längsschnitt L sind zwei Durchführungen 15, 16 der ersten Stützscheibe 14 und zwei Durchführungen 32, 33 der zweiten Stützscheibe 21 sowie zwei Leitungskanäle 30, 31 des Innenkörpers 20 zu erkennen. Die Durchführungen 16, 33 und der Leitungskanal 31 bilden einen Durchführungskanal 34 und die Durchführungen 15, 32 und der Leitungskanal 30 einen Durchführungskanal 35. Damit die Durchführungskanäle 34, 35 zu sehen sind, wurden die Leitungen 9, 11 nicht dargestellt. Durch zwei weitere Durchführungskanäle (nicht zu sehen) des Innenkörpers 20 sind die Leitungen 10 bzw. 12 geführt.

Als Material für die Hülse 23 eignet sich ein weicher Kunststoff.

Die beiden Stützscheibe 14, 21 können aus Kunststoff, Metall oder einer Metalllegierung bestehen. Der Innenkörper 20 besteht aus einem plastisch gut verformbaren Material, zum Beispiel Graphit oder Kunststoff.

Der mittlere Abschnitt 5 weist in einem Außenbereich eine Verjüngung 6 auf, in die ein nicht gezeigtes Dichtungselement angeordnet werden kann, um einen Spalt zwischen Wand 42 und Gehäuse 2 entsprechend der gewünschten IP-Klasse abzudichten.

Die nur schematisch dargestellte Wand 42 trennt den explosionsgeschützten Bereich 7 von dem explosionsgefährdeten Bereich 8. Der Ausgangsabschnitt 4 befindet sich vollständig in dem explosionsgeschützten Bereich 7, wohingegen der mittlere Abschnitt 5 nur teilweise in dem explosionsgeschützten Bereich 7 angeordnet ist.

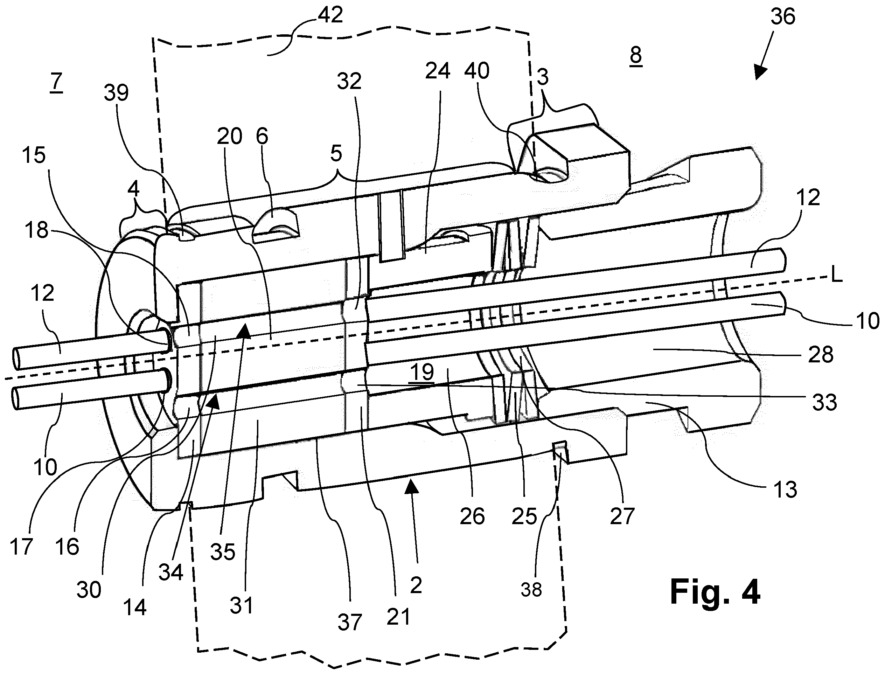

Es ist eine bewegliche Adapterhülse 24 vorgesehen, die zwischen der zweiten Stützscheibe 21 und dem Federelement 25 angeordnet ist. In den Eingangsabschnitt 3 des Gehäuses 2 ist die Montageschraube 13 eingebracht, mit der das Federelement 25 vorgespannt werden kann. Die Montageschraube 13 besitzt, wie auch das Federelement 25 und die Adapterhülse 24, entlang der Längsachse L eine zentrale Durchführung 26, 27 bzw. 28 für Leitungen, so dass die Leitungen durch die Montageschraube 13, Federelement 25 und die Adapterhülse 24 hindurchgeführt werden können. In Figur 4 sind nur die beiden Leitungen 10 und 12 dargestellt. Denkbar ist auch, die Leitungen bereits im Bereich der Adapterhülse 24 seitlich durch Durchführungen hindurchzuführen (nicht gezeigt). In diesem Fall könnten auch Federelemente und Montageschrauben ohne eine zentrale Durchführung eingesetzt werden.

Die Adapterhülse 24 dient zur Kraftübertragung der Federkraft des Federelements 25 auf die zweite Stützscheibe 21 und zur Verdrehsicherung. Die Adapterhülse 24 ist dazu entlang der Längsachse L beweglich angeordnet. Da die zweite Stützscheibe 21 und die Adapterhülse 24 entlang der Längsachse L beweglich in der Hülse 23 angeordnet sind, wird durch die Federkraft des Federelements 25 die Adapterhülse 24 auf die zweite Stützscheibe 21 geschoben, wobei die Stützscheibe 21 die Kraft wiederum auf den verformbaren Innenkörper 20 überträgt. Damit ist gewährleistet, dass bei unerwünschten Verformungen des Innenkörpers 20 - gerade bei tiefen Temperaturen oder bei starken Temperaturschwankungen - das Federelement 25 und die zweite Stützscheibe 21 weiter auf den Innenkörper 20 drücken, wodurch der Innenkörper 20 weiterhin vollständig mit der Hülse 23 bzw. mit den Stützscheiben 14, 21 und den Leitungen in Kontakt bleibt und somit einen Innenraum 29 zwischen den beiden Stützscheiben 14, 21 vollständig ausfüllt. Daher muss das Federelement 25 so ausgebildet sein, dass es die Differenzen in der Wärmeausdehnung zwischen der Hülse 23 und dem Innenkörper 20 vollständig ausgleichen kann und auch bei sehr tiefen Temperaturen noch genügend Kraft übertragen kann, um den Innenkörper 20 plastisch zu verformen. Zur Verdrehsicherung kann beispielsweise eine Bohrung im Umfang des Gehäuses 2 vorgesehen sein, in der ein Stift eingepresst ist. Dieser Stift geht durch eine in der Hülse 23 vorgesehene Durchführung hindurch und greift schließlich in eine Nut der Adapterhülse 24 ein. Auf diese Weise kann sich die Adapterhülse 24 axial verschieben, aber nicht mehr drehen. Weitere Ausführungen mit Stiften, Passfedern oder speziellen, nicht kreisförmigen Profilen der Adapterhülse 24 und der zugeordneten Bohrung im Gehäuse 2 sind technisch ebenfalls möglich.

In Figur 3 ist der Innenkörper 20 einteilig aufgebaut. Möglich ist aber auch, dass der Innenkörper 20 in axialer Richtung unterteilt ist, so dass er aus mehreren Teilabschnitten besteht. Bei vier Leitungen besteht der Innenkörper 20 vorzugsweise aus zwei Teilabschnitten. Besteht der Innenkörper 20 aus mehreren Teilabschnitten, so wird die Montage der Leitungen erleichtert. Denkbar ist aber auch, dass der Innenkörper 20 aus Kunststoffgranulat oder Kunststoffpulver besteht, wobei dann eine Abdichtung gegen den Verlust des Granulats und insbesondere des Pulvers erforderlich ist. Anstelle von Kunststoff kann auch Graphit eingesetzt werden.

Zur Montage der explosionsgeschützten Vorrichtung 1 werden die Leitungen 9 bis 12 zuerst in den Innenkörper 20 eingebracht und sodann die beiden Stützscheiben 13, 21 auf den Innenkörper 20 gesetzt, so dass die Anordnung 22 erhalten wird. Sodann wird die Hülse 23 in das Gehäuse 2 hineingeschoben und die Anordnung 22 der Art eingebracht, dass die Hülse 23 zwischen dem Gehäuse 2 und der Anordnung 22 angeordnet ist. Anschließend wird die Adapterhülse 24 in das Gehäuse 2 hineingeschoben und das Federelement 25 eingebracht, so dass die Adapterhülse 24 zwischen der Anordnung 22 und Federelement 25 angeordnet ist. Schließlich wird die Montageschraube 13 mit einem vorher ermittelten Drehmoment angezogen, so dass die maximale Federkraft des Federelements 25 überschritten wird. Dadurch wird der Innenkörper 20 so verformt, dass der Innenkörper 20 sowohl an einer Innenwand 41 der Hülse 23 als auch an den Leitungen 9 bis 12 vollständig anliegt und damit den gesamten Innenraum 29 ausfüllt. Schließlich wird die Montageschraube 13 um einen definierten Winkel zurückgedreht, das heißt wieder etwas gelöst, um Raum für eine mögliche Temperaturausdehnung des Innenkörpers 20 zu schaffen. Vorzugsweise wird die Montageschraube 13 um einen Winkel von 90° bis 180° zurückgedreht.

Figur 4 zeigt eine Variante der in Figur 3 dargestellten explosionsgeschützten Vorrichtung. Diese Vorrichtung 36 besitzt im Gegensatz zu der Vorrichtung 1 keine Hülse, so dass die Vorrichtung 36 im Wesentlichen der Vorrichtung 1 entspricht, weshalb die Bezugszeichen der einzelnen Bauteile beibehalten wurden. Die beiden Stützscheiben 14, 21 und der Innenkörper 20 besitzt dabei einen größeren Querschnitt, so dass die Stützscheiben 14, 21 sowie der Innenkörper 20 direkt mit einer Innenwand 37 des Gehäuses 2 in Kontakt stehen. Das Federelement 25 gewährleistet, dass bei unerwünschten Verformungen des Innenkörpers 20 - insbesondere bei tiefen Temperaturen oder bei starken Temperaturschwankungen - die zweite Stützscheibe 21 ständig in Richtung des Innenkörpers 20 geschoben wird und somit auf den Innenkörper 20 drückt, wodurch der Innenkörper 20 vollständig mit dem Gehäuse 2, den Leitungen sowie den Stützscheiben 14, 21 in Kontakt bleibt und somit einen Innenraum 29, der von den beiden Stützscheiben 14, 21 und einem Teil der Innenwand 37 des Gehäuses 2 gebildet wird, vollständig ausfüllt.

Zur Verdrehsicherung ist die Bohrung im Umfang des Gehäuses 2 vorgesehen, in der der Stift eingepresst ist. Dieser Stift greift direkt in die Nut der Adapterhülse 24 ein, weil eine Hülse 23 nicht vorgesehen ist. Auf diese Weise kann sich die Adapterhülse 24 axial verschieben, aber nicht mehr drehen. Weitere Ausführungen mit Stiften, Passfedern oder speziellen, nicht kreisförmigen Profilen der Adapterhülse 24 und der zugeordneten Bohrung im Gehäuse 2 sind technisch ebenfalls möglich.

Die kunststoffisolierten Leitungen 9 bis 12 der Vorrichtung 1 bzw. der Vorrichtung 36 sind somit bei der Durchführung durch das Gehäuse 2 gegenüber einer Umgebung ausreichend abgedichtet. Die explosionsgeschützte Vorrichtung 1 bzw. 36 erfüllt deshalb die geforderten Kriterien der Druckfestigkeit, Temperaturbeständigkeit, UV-Beständigkeit, Kaltschlagfestigkeit sowie der chemischen Beständigkeit und damit die Norm UL 1203. Dabei können Federelemente beliebiger Art verwendet werden. Vorteilhaft sind dabei solche Federelemente, die nicht elastomer sind. So eignen sich beispielsweise metallische Federelemente, zum Beispiel Tellerfedern aus Stahl.

Die Vorrichtungen 1 und 36 weisen vier Durchführungskanäle auf, womit diese beiden Vorrichtungen 1 und 36 nur vier Leitungen besitzen. Es versteht sich für einen Fachmann, dass diese Vorrichtungen auch weniger als vier, beispielsweise drei, oder mehr als vier Durchführungskanäle, zum Beispiel sechs oder acht besitzen können, um dadurch entsprechend mehr oder weniger Leitungen aufweisen zu können.

### Bezugszeichenliste

- 1: Explosionsgeschützte Vorrichtung
- 2: Gehäuse
- 3: Eingangsabschnitt
- 4: Ausgangsabschnitt
- 5: Mittlerer Abschnitt
- 6: Verjüngung
- 7: Explosionsgeschützten Bereich
- 8: Explosionsgefährdeter Bereich
- 9-12: Leitungen
- 13: Montageschraube
- 14: Erste Stützscheibe
- 15-18: Durchführungen
- 19: Innenbereich des Gehäuses 2
- 20: Verformbarer Innenkörper
- 21: Zweite Stützscheibe
- 22: Anordnung
- 23: Hülse
- 24: Adapterhülse
- 25: Federelement
- 26-28: Durchführungen
- 29: Innenraum
- 30, 31: Leitungskanäle
- 32, 33: Durchführungen
- 34, 35: Durchführungskanäle
- 36: Explosionsgeschützte Vorrichtung
- 37: Innenwand
- 38: ---
- 39: Nut
- 40: Nut
- 41: Innenwand
- 42: Wand

## Patentansprüche

1. Explosionsgeschützte Vorrichtung (1, 36), umfassend einen verformbaren Innenkörper (20), der wenigstens einen sich entlang einer Längsachse (L) durch den Innenkörper (20) erstreckenden Leitungskanal (30, 31) aufweist, wobei in dem wenigstens einen Leitungskanal (30, 31) eine Leitung (9 bis 12) einbringbar ist, wobei der Innenkörper (20) von einem Gehäuse (2) umgeben ist, wobei das Gehäuse (2) einen Eingangsabschnitt (3) für wenigstens eine Leitung (9 bis 12), einen Ausgangsabschnitt (4) für die wenigstens eine Leitung (9 bis 12) sowie einen zwischen dem Eingangsabschnitt (3) und dem Ausgangsabschnitt (4) angeordneten mittleren Abschnitt (5) aufweist,
wobei zusätzlich ein Federelement (25) vorgesehen ist, und wobei das Federelement (25) im mittleren Abschnitt (5) angeordnet ist und auf den Innenkörper (20) einen Druck ausübt, wobei der Druck groß genug ist, um den Innenkörper (20) zu verformen, wobei eine erste Stützscheibe (14) mit wenigstens einer sich entlang der Längsachse (L) erstreckenden Durchführung (15 bis 18) für eine Leitung (9 bis 12) und eine zweite Stützscheibe (21) mit wenigstens einer sich entlang der Längsachse (L) erstreckenden Durchführung (32, 33) für eine Leitung (9 bis 12) vorgesehen sind und wobei die beiden Stützscheiben (14, 21) den Innenkörper (20) entlang einer Querachse (Q) umgeben, **dadurch gekennzeichnet, dass** zwischen der zweiten Stützscheibe (21) und dem Federelement (25) eine entlang der Längsachse (L) bewegliche Adapterhülse (24) angeordnet ist.

2. Explosionsgeschützte Vorrichtung (1, 36) nach Patentanspruch 1,
**dadurch gekennzeichnet, dass** die wenigstens eine Durchführung (15 bis 18) der ersten Stützscheibe (14) und die wenigstens eine Durchführung (32, 33) der zweiten Stützscheibe (21) sowie der wenigstens eine Leitungskanal (30, 31) des Innenkörpers (20) einen Durchführungskanal (34, 35) bilden, durch den eine Leitung (9 bis 12) hindurchführbar ist.

3. Explosionsgeschützte Vorrichtung (1, 36) nach Patentanspruch 1,
**dadurch gekennzeichnet, dass** die zweite Stützscheibe (21) im mittleren Abschnitt (5) und die erste Stützscheibe (14) im Ausgangsabschnitt (4) angeordnet ist.

4. Explosionsgeschützte Vorrichtung (1, 36) nach Patentanspruch 1,
**dadurch gekennzeichnet, dass** eine Montageschraube (13) vorgesehen ist, die im Eingangsabschnitt (3) des Gehäuses (2) angeordnet ist und mit der die Federkraft des Federelements (25) einstellbar ist.

5. Explosionsgeschützte Vorrichtung (1, 36) nach Patentanspruch 1,
**dadurch gekennzeichnet, dass** eine Hülse (23) vorgesehen ist, die den Innenkörper (20) sowie die beiden Stützscheiben (14, 21) entlang der Längsachse (L) umgibt, wobei die Hülse (23) zwischen dem Innenkörper (20) und dem Gehäuse (2) angeordnet ist.

6. Explosionsgeschützte Vorrichtung (1, 36) nach Patentanspruch 1,
**dadurch gekennzeichnet, dass** der Innenkörper (20) aus mindestens zwei Teilabschnitten besteht.

7. Explosionsgeschützte Vorrichtung (1, 36) nach Patentanspruch 1,
**dadurch gekennzeichnet, dass** der Innenkörper (20) aus Granulat oder Pulver besteht.

## Claims

1. Explosion-proof device (1, 36), comprising a deformable inner body (20) which has at least one cable duct (30, 31) extending along a longitudinal axis (L) through the inner body (20), wherein a cable (9 to 12) can be introduced into the at least one cable duct (30, 31), wherein the inner body (20) is enclosed by a housing (2), wherein the housing (2) has an inlet portion (3) for at least one cable (9 to 12), an output portion (4) for the at least one cable (9 to 12) and a middle portion (5) arranged between the input portion (3) and the output portion (4), wherein a spring element (25) is further provided, and the spring element (25) is arranged in the middle portion (5) and exerts a pressure on the inner body (20), the pressure being large enough to deform the inner body (20), wherein a first support disc (14) with at least one lead-through (15 to 18) extending along the longitudinal axis (L) for a cable (9 to 12) and a second support disc (21) with at least one lead-through (32, 33) extending along the longitudinal axis (L) for a cable (9 to 12) are provided, and wherein the two supporting discs (14, 21) surround the inner body (20) along a transversal axis (Q), **characterized in that** an adapter sleeve (24) movable along the longitudinal axis (L) is arranged between the second supporting disc (21) and the spring element (25).

2. Explosion-proof device (1, 36) according to claim 1,
**characterized in that** the at least one lead-through (15 to 18) of the first supporting disc (14) and the at least one lead-through (32, 33) of the second supporting disc (21) as well as the at least one cable channel (30, 31) of the inner body (20) form a lead-through channel (34, 35) through which a cable (9 to 12) can be passed.

3. Explosion-proof device (1, 36) according to claim 1,
**characterized in that** the second supporting disk (21) is arranged in the middle portion (5) and the first supporting disk (14) is arranged in the outlet portion (4).

4. Explosion-proof device (1, 36) according to claim 1,
**characterized in that** a mounting screw (13) is provided which is arranged in the inlet portion (3) of the housing (2) and which allows the adjustment of the spring force of the spring element (25).

5. Explosion-proof device (1, 36) according to claim 1,
**characterized in that** a sleeve (23) is provided which surrounds the inner body (20) and the two supporting discs (14, 21) along the longitudinal axis (L), the sleeve (23) being arranged between the inner body (20) and the housing (2).

6. Explosion-proof device (1, 36) according to patent claim 1,
**characterized in that** the inner body (20) consists of at least two sub-sections.

7. Explosion-proof device (1, 36) according to claim 1,
**characterized in that** the inner body (20) is made of granulate or powder.

## Revendications

1. Dispositif antidéflagrant (1, 36) comportant un corps intérieur (20) déformable qui présente au moins un canal de câble (30, 31) s'étendant le long d'un axe longitudinal (L) à travers le corps intérieur (20), un câble (9 à 12) pouvant être introduit dans le au moins un canal de câble (30, 31), le corps intérieur (20) étant entouré par un boîtier (2), le boîtier (2) présentant une section d'entrée (3) pour au moins un câble (9 à 12), une section de sortie (4) pour le au moins un câble (9 à 12) ainsi qu'une section centrale (5) disposée entre la section d'entrée (3) et la section de sortie (4),
un élément à ressort (25) étant en outre prévu, et l'élément à ressort (25) étant disposé dans la section centrale (5) et exerçant une pression sur le corps intérieur (20), la pression étant suffisamment grande pour déformer le corps intérieur (20), un premier disque de support (14) avec au moins un passage (15 à 18) pour un câble (9 à 12) s'étendant le long de l'axe longitudinal (L) et un deuxième disque de support (21) avec au moins un passage (32, 33) pour un câble (9 à 12) étant prévu, et les deux disques de support (14, 21) entourant le corps intérieur (20) le long d'un axe transversal (Q), **caractérisé en ce qu'**un manchon adaptateur (24) mobile le long de l'axe longitudinal (L) est disposé entre le deuxième disque de support (21) et l'élément à ressort (25).

2. Dispositif antidéflagrant (1, 36) selon la revendication 1,
**caractérisé en ce que** le au moins un passage (15 à 18) du premier disque de support (14) et le au moins un passage (32, 33) du deuxième disque de support (21) ainsi que le au moins un canal de câble (30, 31) du corps intérieur (20) forment un canal de passage (34, 35) à travers lequel un câble (9 à 12) peut être passée.

3. Dispositif antidéflagrant (1, 36) selon la revendication 1,
**caractérisé en ce que** le deuxième disque de support (21) est disposé dans la section centrale (5) et le premier disque de support (14) est disposé dans la section de sortie (4).

4. Dispositif antidéflagrant (1, 36) selon la revendication 1,
**caractérisé en ce qu'**une vis de montage (13) est disposée dans la section d'entrée (3) du boîtier (2) et permet de régler la force de ressort de l'élément de ressort (25).

5. Dispositif antidéflagrant (1, 36) selon la revendication 1,
**caractérisé en ce qu'**un manchon (23) est prévu qui entoure le corps intérieur (20) ainsi que les deux disques de support (14, 21) le long de l'axe longitudinal (L), le manchon (23) étant disposé entre le corps intérieur (20) et le boîtier (2).

6. Dispositif antidéflagrant (1, 36) selon la revendication 1, **caractérisé en ce que** le corps intérieur (20) se compose d'au moins deux sections.

7. Dispositif antidéflagrant (1, 36) selon la revendication 1,
**caractérisé en ce que** le corps intérieur (20) est constitué de granulés ou de poudre.
